# EUROPÄISCHE PATENTANMELDUNG

(11) **EP 2 208 970 A1**
(43) Veröffentlichungstag der Anmeldung: **21.07.2010**
(21) Anmeldenummer: 10150838.0
(22) Anmeldetag: 15.01.2010
(51) Int. Cl.: G01F 11/24, A47J 31/40

(54) **Dosiereinrichtung**

(30) Priorität: 20.01.2009 DE 102009000308
(71) Anmelder: BSH Bosch und Siemens Hausgeräte GmbH, 81739 München (DE)
(72) Erfinder: Beck, Rudolf, 84579, Unterneukirchen (DE); Küchler, Christof, 83374, Traunwalchen (DE); Mathes, Anton, 83364, Neukirchen am Teisenberg (DE)

(57) **Zusammenfassung**

Die vorliegende Erfindung betrifft eine Dosiereinrichtung (1) zum Dosieren von rieselfähigen Medien (2), insbesondere von Zucker (2), mit einer in einem Zylinderraum (3) drehbar gelagerten Dosierwalze (4), die an ihrer, der Zylinderwandung zugewandten zylindrischen Mantelfläche zumindest einen sich radial nach innen erstreckenden Dosierraum (5) aufweist, wobei die Dosiereinrichtung (1) bei jedem Rotationszyklus ein dem Dosierraum (5) entsprechendes Volumen an rieselfähigem Medium (2) abgibt. Erfindungswesentlich ist dabei, dass das Volumen des Dosierraums (5) einem üblichen, halben Teelöffel entspricht. Hierdurch soll die Dosierung von insbesondere Zucker vereinfacht werden.

## Beschreibung

Die vorliegende Erfindung betrifft eine Dosiereinrichtung zum Dosieren von rieselfähigen Medien, insbesondere zum Dosieren von Zucker, gemäß dem Oberbegriff des Anspruchs 1. Die Erfindung betrifft außerdem einen Getränkeautomaten, insbesondere einen Kaffeeautomaten, mit einer derartigen Dosiereinrichtung.

Eine gattungsgemäße Dosiereinrichtung ist bspw. aus der DE 296 14 473 U1 bekannt und wird in dieser als so genannter Rotationskolbendosierer bezeichnet. Die Dosiereinrichtung weist dabei zum Variieren eines in einer Dosierkammer geförderten Volumens des zu dosierenden Mediums einen Dosierschieber auf, der derart in radialer Richtung in einen Zylinderraum, in welchem der Rotationskolben drehbar gelagert ist, hinein verstellbar geführt ist, das zwischen den Rotationskolben und dem diesen zugekehrten Ende des Dosierschiebers ein Dosierspalt mit einer variablen Öffnungsweite einstellbar ist. Da der Rotationskolben eine oszillierende Mantelfläche aufweist, wird der Dosierschieber derart angetrieben, dass er in jedem Rotationszyklus in einer Dichtphase über einen Dichtbereich des Rotationskolbens dichtend mit der Mantelfläche des Rotationskolbens zusammenwirkt und in einer Dosierphase in einem bestimmten Bereich zwischen dem jeweils vorbeibewegten Dichtbereich und dem nachfolgenden Dichtbereich zur Bildung des Dosierspalts von der rotationssynchron oszillierenden Bewegung abweicht. Hierdurch soll eine besonders exakte Dosierung erreicht werden.

Aus der DE 20 2008 000 028 U1 ist eine weitere Dosiereinrichtung bekannt, umfassend einen in einem Gehäuse untergebrachten Vorratsbehälter für das zu dosierende Medium, das über eine eine erste Austrittsöffnung aufweisende Abdeckung kopfseitig verschlossen ist. Sowie ein mit dem Gehäuse verbundenes und die Abdeckung umgebendes Haubenelement mit einer das Medium abgebenden zweiten Austrittsöffnung. Dabei ist das Haubenelement relativ zum Gehäuse drehbar und weist eine in Abhängigkeit von der Drehstellung des Haubenelements mit einem Schieber wechselwirkende Kulisse auf mit zumindest einem ersten Abschnitt, über den bei Drehen des Haubenelements der Schieber eine Kraftbeaufschlagung derart erfährt, dass er entgegen der Federkraft zum Ausrichten der Aufnahme von der einen Austrittsöffnung auf die oder in Richtung der anderen Austrittsöffnung verstellbar ist. Hierdurch soll eine Dosiereinrichtung geschaffen werden, die eine reproduzierbare Abgabe von rieselfähigem Medium konstruktiv einfach ermöglicht.

Moderne Getränkeautomaten, insbesondere Kaffeeautomaten, besitzen bereits häufig eine Dosiereinrichtung, mittels welcher Zucker in das gewünschte Getränk eingebracht werden kann. Dabei ist die abgegebene und in das Getränk eingebrachte Zuckermenge üblicherweise abhängig von einer Betriebsdauer der Dosiereinrichtung und daher für einen Verbraucher nur äußerst schwer abschätzbar. Als Ergebnis stellt sich somit häufig ein ungenügend gesüßtes oder völlig überzuckertes Getränk ein, was in beiden Fällen nicht dem Kundenwunsch entspricht.

Die vorliegende Erfindung beschäftigt sich mit dem Problem, für eine Dosiereinrichtung der gattungsgemäßen Art, eine verbesserte oder eine alternative Ausführungsform anzugeben, mit welcher insbesondere die Kundenzufriedenheit gesteigert werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Dosiereinrichtung zur Dosierung von insbesondere Zucker in zubereiteten Heißgetränken derart auszubilden, dass diese pro Dosiervorgang eine für einen Nutzer nachvollziehbare Menge an Zucker abgibt. Eine derartige nachvollziehbare Menge ist bspw. ein halber Teelöffel, was üblicherweise dem Volumen von ca. 2,5 cm³ entspricht. Die erfindungsgemäße Dosiereinrichtung ist dabei generell zum Dosieren jedweder rieselfähiger Medien, insbesondere jedoch von Zucker, ausgebildet und umfasst eine in einem Zylinderraum drehbar gelagerte Dosierwalze, die an ihrer der Zylinderwandung zugewandten zylindrischen Mantelfläche zumindest einen sich nach radial innen erstreckenden Dosierraum aufweist. Bei jedem Rotationszyklus der Dosierwalze, gibt die Dosiereinrichtung ein dem Dosierraum entsprechendes Volumen an rieselfähigem Medium, respektive Zucker, ab. Indem nun erfindungsgemäß das Volumen des Dosierraums einem üblichen, halben Teelöffel entspricht, ist für den Benutzer stets nachvollziehbar, wie viel Zucker er bei Betätigung der Dosiereinrichtung dem zu süßenden Getränk beimischt. Hierdurch kann insbesondere die Herstellung von ungenügend gesüßten oder stark überzuckerten Getränken vermieden werden, wodurch zum einen Kosten eingespart werden können und zum anderen die Kundenzufriedenheit deutlich erhöht werden kann, da sich diese nicht mehr über falsch gesüßte Getränke ärgern, sondern stets ein exakt ihren Wünschen entsprechend gesüßtes Getränk erhalten.

Bei einer vorteilhaften Weiterbildung der erfindungsgemäßen Lösung, ist an der Dosierwalze eine schräg zur Walzenachse verlaufende Trennkante angeordnet. Eine derartige schräg zur Walzenachse angeordnete Trennkante verringert die Scherkräfte beim Betrieb der Dosiereinrichtung, die von dem rieselfähigen und zu dosierenden Medium auf die Trennkante beim Abtrennen des Dosiervolumens einwirken. Insbesondere im Vergleich zu einer parallel zur Walzenachse verlaufenden Trennkante, können somit die im Moment der Abtrennung des Dosiervolumens auftretenden Scherkräfte deutlich reduziert werden, wodurch einerseits eine gleichmäßige Kräfteverteilung und ein ruhigerer Betrieb der Dosierung möglich sind und andererseits die Lagerung der Dosierwalze einfacher und dadurch kostengünstiger gestaltet werden kann.

Bei einer vorteilhaften Weiterbildung der erfindungsgemäßen Lösung, weist die Dosierwalze eine zumindest bereichsweise mehrkantige Axialöffnung auf, über welche sie mit einer entsprechenden Welle einer elektrischen Antriebseinrichtung koppelbar ist. Mit der zumindest bereichsweise mehrkantigen Axialöffnung, welche bei montierter Dosiereinrichtung mit einer mehrkantigen Welle zusammenwirkt, lässt sich einerseits eine formschlüssige Verbindung zwischen der Antriebswelle und der Drehwalze und dadurch eine gute Drehmomentübertragung erreichen und zum anderen kann eine Falschmontage der Drehwalze auf der Antriebswelle ausgeschlossen werden, da die Drehwalze ausschließlich in vorbestimmten Drehwinkelstellungen mit der Antriebswelle der elektrischen Antriebseinrichtung verbindbar ist.

Zweckmäßig ist die elektrische Antriebseinrichtung über eine Steuerereinrichtung steuerbar, die derart ausgebildet ist, dass über diese eine Abgabe von einem halben bis fünf Teelöffel rieselfähigem Medium auswählbar ist. Die Steuereinrichtung kann dabei bspw. derart ausgebildet sein, dass sie pro Steuerbefehl, bspw. jeweils einem Tastendruck, jeweils einen halben Teelöffel Zucker abgibt oder aber dass die gesamte gewünschte abzugebende Zuckermenge vorab mittels eines entsprechenden Tastendrucks ausgewählt werden kann. Beide Ausführungsformen bieten dem Benutzer den großen Vorteil, dass dieser exakt darüber informiert wird und somit exakt entscheiden kann, wie viel Zucker seinem Getränk zugesetzt werden soll.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Dosiereinrichtung zum Dosieren von rieselfähigen Medien, insbesondere von Zucker, in einer Schnittdarstellung,
- Fig. 2: eine Drehwalze der Dosiereinrichtung in einer Ansicht,
- Fig. 3: eine Draufsicht auf die Drehwalze gemäß der Fig. 2.

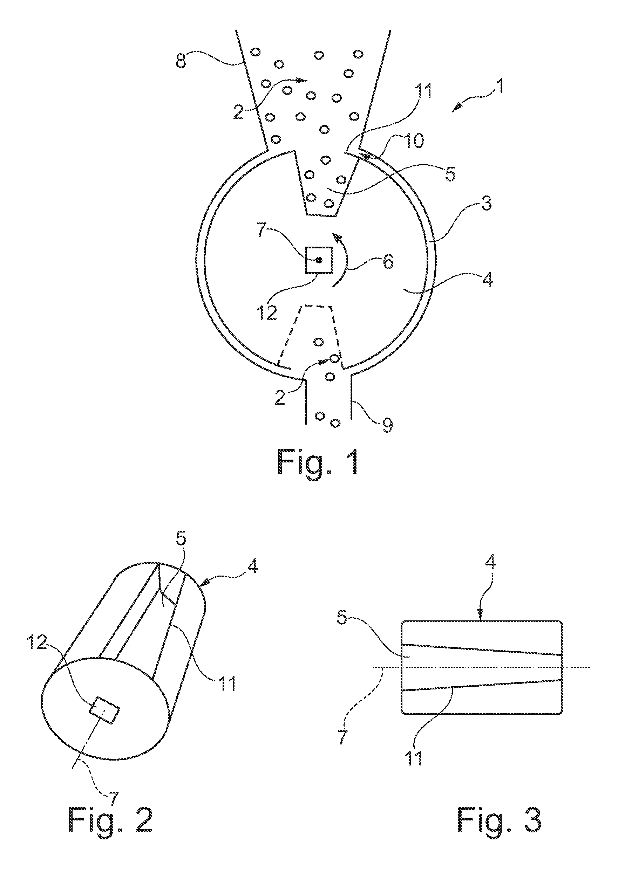

Entsprechend der Fig. 1, weist eine erfindungsgemäße Dosiereinrichtung 1 zum Dosieren von rieselfähigen Medien 2, insbesondere von Zucker 2, eine in einem Zylinderraum 3 drehbar gelagerte Dosierwalze 4 auf. An ihrer der Zylinderwandung zugewandten zylindrischen Mantelfläche weist die Dosierwalze 4 einen sich nach radial innen erstreckenden Dosierraum 5 auf, dessen Volumen in etwa einem üblichen, halben Teelöffel entspricht. Beim Betrieb der Dosiereinrichtung 1 dreht sich dabei die Dosierwalze 4 in Drehrichtung 6 um eine Walzenachse 7, wobei an der Dosierwalze 4 nicht nur ein Dosierraum 5 angeordnet sein kann, sondern auch mehrere.

In der gemäß der Fig. 1 mit durchgezogener Linie gezeichneten Stellung der Dosierwalze 4, befindet sich deren Dosierraum 5 oben, dass heißt in kommunizierender Verbindung mit einem Reservoir 8, in welchem das rieselfähige Medium 2, respektive der Zucker 2, gelagert ist. Beim Weiterdrehen der Drehwalze 4 befördert diese den im Dosierraum 5 portionierten Zucker bis zu einem Auslass 9, durch welchen der portionierte Zucker 2, respektive das rieselfähige Medium 2, in dosierter Menge abgegeben wird. Durch die erfindungsgemäße Lösung, dass das Volumen des Dosierraums 5 in etwa einem üblichen, halben Teelöffel entspricht, weiß ein Benutzer der Dosiereinrichtung 1 stets, wie viel Zucker 2 bei jedem Rotationszyklus von der Dosiereinrichtung 1 abgegeben und in ein bspw. unterhalb des Auslasses 9 positioniertes Getränk eingestreut wird. Das Dosierraumvolumen beträgt dabei ca. 2,5 cm³.

Betrachtet man die Fig. 1 weiter, so erkennt man, dass an der Zylinderwandung ein der Mantelfläche der Dosierwalze 4 zugewandter und mit diesem in Kontakt stehender elastischer Abstreifer 10 vorgesehen ist, welcher bspw. in der Art einer auf der Mantelfläche der Dosierwalze 4 gleitenden Lippe ausgebildet sein kann. Der Abstreifer 10 verhindert dabei, dass rieselfähiges Medium 2, respektive Zucker, in einen Ringraum zwischen die Dosiereinrichtung 1 und die Dosierwalze 4 gelangt und bspw. die Funktionsfähigkeit der Dosiereinrichtung 1 beeinträchtigen kann. Um darüber hinaus die im Moment der Abtrennung des Dosiervolumens auftretenden Scherkräfte zu minimieren, ist an der Dosierwalze 4 eine schräg zur Walzenachse 7 verlaufende Trennkante 11 angeordnet (vgl. auch die Fig. 2 und 3). Eine derartige schräge Trennkante 11 führt dabei nicht nur zu einer gleichmäßigen Kräfteverteilung und einer ruhigen runden Drehung, sondern reduziert auch die auf eine Lagerung der Drehwalze 4 einwirkenden Lagerkräfte.

Zum Antrieb der Dosierwalze 4 ist vorzugsweise eine elektrische Antriebseinrichtung vorgesehen, welche über eine zugehörige Steuereinrichtung steuerbar ist. Die Steuereinrichtung ist dabei derart ausgebildet, dass über sie eine Abgabe von einem halben bis zu fünf Teelöffeln rieselfähigem Medium auswählbar ist. Eine Bedienung der Steuereinrichtung kann bspw. mittels eines Tastendrucks erfolgen, wobei ein Tastendruck der Abgabe eines halben Teelöffels Zucker 2 entspricht, während bspw. zwei kurz aufeinander folgende Tastendrücke der Abgabe von einem Teelöffel Zucker 2 entsprechen. Denkbar ist selbstverständlich auch, dass mittels unterschiedlicher Tasten mit jeweils einem Tastendruck unterschiedliche Abgabemengen auswählbar sind.

Um eine Drehmomentenübertragung zwischen der Antriebseinrichtung und der Dosierwalze 4 verbessern zu können, weist letztere eine zumindest bereichsweise mehrkantige Axialöffnung 12 auf, welche gemäß den in den Fig. 1 bis 3 dargestellten Ausführungsformen einen Vierkantquerschnitt aufweist, über welchen sie mit einer entsprechenden, komplementär ausgebildeten Welle der Antriebseinrichtung gekoppelt ist. Die erfindungsgemäße Dosiereinrichtung 1 kann bspw. als separates Gerät verwendet werden oder aber einen integralen Bestandteil eines Getränkeautomatens, bspw. eines Kaffeeautomatens, bilden. Von besonderem Vorteil bei der erfindungsgemäßen Dosiereinrichtung 1 ist, dass diese eine für einen Benutzer nachvollziehbare und übliche Menge an rieselfähigem Medium 2, insbesondere an Zucker 2, abgibt, so dass die Gefahr des Herstellens eines ungenügend gesüßten Getränks oder aber eines völlig überzuckerten Getränks, zuverlässig ausgeschlossen werden kann. Mit der Dosiereinrichtung 1 kann somit die Kundenzufriedenheit erheblich gesteigert werden, da eine Fehldosierung an Zucker 2 vorzugsweise vollständig ausgeschlossen werden kann.

### Bezugszeichenliste

- 1: Dosiereinrichtung
- 2: rieselfähiges Medium, Zucker
- 3: Zylinderraum
- 4: Dosierwalze
- 5: Dosierraum
- 6: Drehrichtung
- 7: Walzenachse
- 8: Reservoir
- 9: Auslass
- 10: Abstreifer
- 11: Trennkante
- 12: Axialöffnung

## Patentansprüche

1. Dosiereinrichtung (1) zum Dosieren von rieselfähigen Medien (2), insbesondere von Zucker (2), mit einer in einem Zylinderraum (3) drehbar gelagerten Dosierwalze (4), die an ihrer, der Zylinderwandung zugewandten zylindrischen Mantelfläche zumindest einen sich radial nach innen erstreckenden Dosierraum (5) aufweist, wobei die Dosiereinrichtung (1) bei jedem Rotationszyklus ein dem Dosierraum (5) entsprechendes Volumen an rieselfähigem Medium (2) abgibt, **dadurch gekennzeichnet, dass** das Volumen des Dosierraums (5) einem üblichen, halben Teelöffel entspricht.

2. Dosiereinrichtung nach Anspruch 1, **dadurch gekennzeichnet, dass** das Volumen des Dosierraums (5) ca. 2,5 cm³ beträgt.

3. Dosiereinrichtung nach Anspruch 1 oder 2, **dadurch gekennzeichnet, dass** an der Zylinderwandung ein der Mantelfläche der Dosierwalze (4) zugewandter und mit dieser in Kontakt stehender elastischer Abstreifer (10) vorgesehen ist.

4. Dosiereinrichtung nach einem der Ansprüche 1 bis 3, **dadurch gekennzeichnet, dass** an der Dosierwalze (4) eine schräg zur Walzenachse (7) verlaufende Trennkante (11) angeordnet ist.

5. Dosiereinrichtung nach einem der Ansprüche 1 bis 4, **dadurch gekennzeichnet, dass** eine elektrische Antriebseinrichtung zum Antrieb der Dosierwalze (4) vorgesehen ist, welche über eine Steuereinrichtung steuerbar ist.

6. Dosiereinrichtung nach Anspruch 5, **dadurch gekennzeichnet, dass** die Steuereinrichtung derart ausgebildet ist, das über sie eine Abgabe von einem halben bis fünf Teelöffel rieselfähigem Medium (2) auswählbar ist.

7. Dosiereinrichtung nach Anspruch 5 oder 6, **dadurch gekennzeichnet, dass** die Dosierwalze (4) eine zumindest bereichsweise mehrkantige Axialöffnung (12) aufweist, über welche sie mit einer entsprechenden Welle der elektrischen Antriebseinrichtung koppelbar ist.

8. Dosiereinrichtung nach einem der Ansprüche 1 bis 7, **dadurch gekennzeichnet, dass** die Dosiereinrichtung (1) einen integralen Bestandteil eines Getränkeautomatens, insbesondere eines Kaffeeautomatens, bildet.

9. Getränkeautomat, insbesondere ein Kaffeeautomat, mit einer Dosiereinrichtung (1) nach einem der Ansprüche 1 bis 8.
